# EUROPÄISCHE PATENTANMELDUNG

(11) **EP 1 818 853 A2**
(43) Veröffentlichungstag der Anmeldung: **15.08.2007**
(21) Anmeldenummer: 07002250.4
(22) Anmeldetag: 02.02.2007
(51) Int. Cl.: G06K 7/00

(54) **Verfahren zur drahtlosen Datenübertragung zwischen einer Basisstation und einem Transponder mittels induktiver Kopplung**

(30) Priorität: 10.02.2006 DE 102006007262
(71) Anmelder: ATMEL Germany GmbH, 74072 Heilbronn (DE)
(72) Erfinder: Kurz, Alexander, 74523 Schwäbisch Hall (DE); Neal, Mathew, 83539 Pfaffing (DE)

(57) **Zusammenfassung**

Die Erfindung betrifft ein Verfahren zur drahtlosen Datenübertragung zwischen einer Basisstation und einem Transponder mittels induktiver Kopplung.

Bei dem erfindungsgemäßen Verfahren zur drahtlosen Datenübertragung zwischen einer Basisstation und einem Transponder mittels induktiver Kopplung unterstützt der Transponder einen ersten Datenübertragungsprotokolltyp und/oder einen zweiten Datenübertragungsprotokolltyp. Bei dem ersten Datenübertragungsprotokolltyp wird die Datenübertragung bei einem Überschreiten eines Zeitdauermaximalwerts (tmax) zwischen aufeinanderfolgenden Feldlücken beendet und bei dem zweiten Datenübertragungsprotokolltyp wird nach dem Einleiten der Datenübertragung eine Referenzzeitdauer durch die Basisstation übertragen, anhand der ein Kalibrierwert in dem Transponder ermittelt wird, wobei der Kalibrierwert zur Kalibrierung nachfolgend empfangener Zeitdauern (t0, t1, tmax) dient. Die Referenzzeitdauer wird größer als der Zeitdauermaximalwert (tmax) gewählt.

Verwendung beispielsweise in RFID-Systemen.

## Beschreibung

Die Erfindung betrifft ein Verfahren zur drahtlosen Datenübertragung zwischen einer Basisstation und einem Transponder mittels induktiver Kopplung.

Kontaktlose Identifikationssysteme oder so genannte Radio-Frequency-Identification(RFID)-Systeme bestehen üblicherweise aus einer Basisstation bzw. einem Lesegerät oder einer Leseeinheit und einer Vielzahl von Transpondern oder Remote-Sensoren. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung zwischen dem Transponder und der Basisstation, beispielsweise für einen Programmiervorgang des Transponders, weist der Transponder eine Schnittstelle eines bestimmten Schnittstellentyps auf, der kompatibel zum entsprechenden Schnittstellentyp der Basisstation ist. Die Schnittstellentypen können in einer ersten groben Gliederung in kontaktbehaftete und kontaktlose Typen eingeteilt werden.

Die Schnittstellentypen, bei denen die Datenübertragung kontakt- bzw. berührungslos erfolgt, unterscheiden sich unter anderem durch die zur Datenübertragung verwendete Arbeits- bzw. Trägerfrequenz, d.h. die durch die Basisstation gesendete Frequenz. Häufig verwendete Frequenzen sind beispielsweise 125 kHz (LF-Bereich), 13,56 MHz (RF-Bereich), ein Frequenzbereich zwischen 860 MHz bis 960 MHz (UHF-Bereich) und ein Frequenzbereich größer als 3GHz (Mikrowellenbereich).

Ein weiteres Unterscheidungsmerkmal unterschiedlicher Schnittstellentypen ist die Art der Kopplung zwischen den jeweiligen Schnittstellen des Transponders und der Basisstation. Hierbei wird unter anderem zwischen der so genannten induktiven oder magnetischen Kopplung und der so genannten Fernfeldkopplung unterschieden. Vereinfacht dargestellt, bilden bei der induktiven oder Nahfeldkopplung eine Antennenspule der Basisstation und eine an einen Eingangskreis des Transponders angeschlossene Antennenspule einen Transformator, weshalb diese Kopplungsart auch als transformatorische Kopplung bezeichnet wird. Bei der induktiven Kopplung ist eine maximale Entfernung zwischen dem Transponder und der Basisstation auf den Bereich eines Nahfeldes der verwendeten Antennen beschränkt. Der Nahfeldbereich wird im wesentlichen durch die Arbeitsfrequenz der Schnittstelle festgelegt.

Zur Datenübertragung von einem Transponder zur Basisstation wird bei der induktiven Kopplung in der Regel die so genannte Lastmodulation verwendet, siehe hierzu beispielsweise Finkenzeller, Kapitel 3.2.1.2.1 "Lastmodulation".

Zur Datenübertragung von der Basisstation zum Transponder sendet die Basisstation bei der induktiven Kopplung üblicherweise ein Trägersignal mit einer Frequenz in einem Frequenzbereich von 50kHz bis 250kHz. Zur Einleitung der Datenübertragung erzeugt die Basisstation durch Amplitudenmodulation des Trägersignals zunächst eine kurze Feldlücke oder eine so genannte "Gap", d.h. die Amplitude des Trägersignals wird kurzzeitig, beispielsweise für ca. 50us bis 400us, gedämpft bzw. abgeschwächt oder vollständig unterdrückt.

Zeichen, die im Anschluss an die Einleitung der Datenübertragung von der Basisstation gesendet werden, werden durch zugehörige Zeitdauern zwischen jeweils zeitlich aufeinanderfolgenden Feldlücken kodiert. Einem ersten Zeichenwert wird hierbei eine erste Zeitdauer zugeordnet und mindestens einem zweiten Zeichenwert wird eine zweite Zeitdauer zugeordnet. Zur Dekodierung der übertragenen Zeichen ermittelt der Transponder die jeweiligen Zeitdauern zwischen den Feldlücken und bestimmt aus der ermittelten Zeitdauer den Wert des übertragenen Zeichens.

Zur fehlerfreien Datenübertragung bzw. Dekodierung der Zeichen ist es notwendig, dass die von der Basisstation erzeugten und im Transponder durch induktive Kopplung empfangenen Signalverläufe festgelegte, maximale Toleranzen aufweisen, beispielsweise hinsichtlich ihres zeitlichen Verlaufs und/oder der verwendeten Pegel.

Zur Vergrößerung der erzielbaren Reichweiten zwischen Basisstation und passiven Transpondern wird die Güte eines Parallelschwingkreises, der aus der Antennenspule und einem hierzu parallel geschalteten Kondensator gebildet wird, erhöht, um die Versorgung der passiven Transponder aus dem von der Basisstation gesendeten Feld auch bei größeren Entfernungen zu ermöglichen. Aufgrund der reduzierten Dämpfung des Schwingkreises bewirkt dies, dass bei einer Feldlücke die Spulenspannung bzw. die Spannung am Parallelschwingkreis des Transponders langsamer absinkt als bei einem Schwingkreis mit geringerer Güte und somit höherer Dämpfung. Da die Feldlücke jedoch im Transponder erst erkannt werden kann, wenn die Spulenspannung bzw. eine aus der Spulenspannung durch Gleichrichtung gewonnene Spannung unter ein einstellbares Potential gesunken ist, werden Feldlücken im Vergleich zu einem Schwingkreis mit geringer Güte verzögert erkannt. Dies führt im Ergebnis dazu, dass die Zeitdauer der im Transponder detektierten Feldlücken verkürzt und die Zeitdauern zwischen den Feldlücken, die den entsprechenden Zeichenwert repräsentieren, verlängert werden. Diese Veränderung des Timings der im Transponder detektierten Signalverläufe wird unmittelbar von der Güte des Schwingkreises beeinflusst. In anderen Worten hängt das Timing der im Transponder empfangenen Signale wesentlich von unterschiedlichen Parametern ab, beispielsweise von der verwendeten Antennenspule, wodurch eine fehlerfrei Datenübertragung bei Parameteränderungen nicht immer garantiert werden kann.

Um auch bei derartigen parameterabhängigen Timingschwankungen eine störungsfreie Datenübertragung sicherstellen zu können, ist in der DE 101 38 218 A1 ein Verfahren beschrieben, bei dem nach dem Einleiten der Datenübertragung eine Referenzzeitdauer durch aufeinander folgende Feldlücken durch die Basisstation übertragen wird, anhand der ein Kalibrierwert in dem Transponder ermittelt wird, wobei der Kalibrierwert zur Kalibrierung nachfolgend empfangener Zeitdauern dient. Die Referenzzeitdauer entspricht hierbei einem bekannten Zeichenwert, beispielsweise "0". Da im Transponder bekannt ist, wie lange die zum Zeichenwert "0" gehörende Zeitdauer theoretisch sein muss, kann aus der tatsächlichen, gemessenen Referenzzeitdauer der Kalibrier- bzw. Offsetwert berechnet werden.

Dieses Verfahren lässt sich jedoch mit Transpondern, die dieses Verfahren bzw. diese Übertragungsprotokoll nicht unterstützen, nicht ausführen, da diese die Referenzzeitdauer bereits als Zeichen interpretieren, wodurch die im Transponder empfangene Zeichenfolge verfälscht wird.

Die DE 198 27 476 C1 offenbart ein Verfahren, bei welchem im Anschluss an einen HF-Ladeimpuls zwei Referenzimpulse gesendet werden, von denen der eine mit längerer Dauer ein H-Bit repräsentiert und der andere mit kürzerer Dauer ein L-Bit repräsentiert.

Aus der DE 197 44 781 C1 ist ein Verfahren zum Kalibrieren eines RC-Oszillators eines Transponders bekannt, bei welchem ein Datensatz um ein Kalibriersignal zur Berechnung eines Korrekturwerts erweitert wird.

Der vorliegenden Erfindung liegt die Aufgabe zugrunde, ein Verfahren zur drahtlosen Datenübertragung zwischen einer Basisstation und einem Transponder mittels induktiver Kopplung zur Verfügung zu stellen, welches einerseits eine störungsfreie Datenübertragung bei parameterabhängigen Timingschwankungen ermöglicht und gleichzeitig auch mit Transpondern durchführbar ist, welche keine Kalibriermechanismen zum Ausgleich von Timingschwankungen aufweisen.

Die Erfindung löst diese Aufgabe durch ein Verfahren mit den Merkmalen des Anspruchs 1.

Das erfindungsgemäße Verfahren ist mit Transpondern durchführbar, die einen ersten Datenübertragungsprotokolltyp und/oder einen zweiten Datenübertragungsprotokolltyp unterstützen. Unabhängig vom Datenübertragungsprotokolltyp sendet die Basisstation ein Trägersignal mit einer Frequenz in einem Frequenzbereich von 50KHz bis 250KHz, eine Datenübertragung wird von der Basisstation durch Erzeugen einer Feldlücke des Trägersignals eingeleitet, Zeichen, die von der Basisstation an den Transponder übertragen werden, werden durch zugehörige Zeitdauern zwischen jeweils zeitlich aufeinanderfolgenden Feldlücken kodiert, einem ersten Zeichenwert wird eine erste Zeitdauer zugeordnet und mindestens einem zweiten Zeichenwert wird eine zweite Zeitdauer zugeordnet. Bei dem ersten Datenübertragungsprotokolltyp wird die Datenübertragung bei einem Überschreiten eines Zeitdauermaximalwerts zwischen aufeinanderfolgenden Feldlücken beendet. Bei dem zweiten Datenübertragungsprotokolltyp wird nach dem Einleiten der Datenübertragung eine Referenzzeitdauer durch die Basisstation übertragen, anhand der ein Kalibrierwert in dem Transponder ermittelt wird, wobei der Kalibrierwert zur Kalibrierung nachfolgend empfangener Zeitdauern dient. Die Referenzzeitdauer wird größer als der Zeitdauermaximalwert gewählt wird und die Datenübertragung wird beendet, wenn eine im Anschluss an die Referenzzeitdauer ermittelte Zeitdauer den Zeitdauermaximalwert überschreitet. Die Datenübertragung gemäß beider Datenübertragungsprotokolltypen wird durch Senden einer ersten Feldlücke eingeleitet. Transponder, die ausschließlich den ersten Datenübertragungsprotokolltyp unterstützen, gehen nach dem Senden der ersten Feldlücke durch die Basisstation somit in Empfangsbereitschaft und erwarten eine weitere bzw. zweite Feldlücke in einem zeitlichen Abstand zur ersten Feldlücke, der einem zugehörigen, gültigen Zeichenwert entspricht. Durch die Wahl der Referenzzeitdauer größer als der Zeitdauermaximalwert wird bewirkt, dass diejenigen Transponder, die ausschließlich den ersten Datenübertragungsprotokolltyp unterstützen, während der Übertragung der Referenzzeitdauer, nach dem Ablauf der Zeitdauermaximalwerts die Datenübertragung beenden, d.h. ihre Empfangsbereitschaft einstellen und ihre Empfangslogik zurücksetzen. Wird nun die zweite Feldlücke übertragen, die das Ende der Referenzzeitdauer und den Beginn der Übertragung des ersten zu übertragenden Zeichens bzw. Nutzdatums markiert, interpretiert der Transponder dies als erneute Einleitung der Datenübertragung. Da sich der erste und der zweite Datenübertragungsprotokolltyp im weiteren Protokollablauf nicht unterscheiden, d.h. insbesondere die zu den unterschiedlichen Zeitdauern gehörenden Zeichenwerte identisch sind, empfängt der Transponder des ersten Datenübertragungsprotokolltyps auch Daten, die gemäß des zweiten Datenübertragungsprotokolltyps übertragen werden, da die Übertragung der Referenzzeitdauer lediglich zu einem Rücksetzen der Empfangsbereitschaft im Transponder führt. Auf diese Weise können Daten sowohl mit Transpondern des zweiten Datenübertragungsprotokolltyps als auch mit Transpondern des ersten Datenübertragungsprotokolltyps ausgetauscht werden, d.h. das Datenübertragungsprotokoll ist abwärtskompatibel.

In einer Weiterbildung des Verfahrens werden die erste Zeitdauer, die zweite Zeitdauer und/oder die Referenzzeitdauer im Transponder durch Zählen von Schwingungen des Trägersignals bestimmt. Auf diese Weise kann eine Periodendauer des Trägersignals als Zeitbasis dienen, d.h. ein transponderinterner Taktgenerator ist nicht erforderlich.

In einer Weiterbildung des Verfahrens wird in dem Transponder überwacht, ob eine Zeitdauer zwischen der Feldlücke zur Einleitung der Datenübertragung und einer nachfolgenden Feldlücke innerhalb mindestens eines einstellbaren Zeitintervalls liegt. Wenn diese Zeitdauer innerhalb des Zeitintervalls liegt wird eine Dekodierung der empfangenen Zeichen anhand des ersten Datenübertragungsprotokolltyps durchgeführt. Dies ist insbesondere für Transponder sinnvoll, die sowohl den ersten als auch den Datenübertragungsprotokolltyp unterstützen. Wenn beispielsweise eine Basisstation, die lediglich den ersten Datenübertragungsprotokolltyp unterstützt, eine Datenübertragung mit einem derartigen Transponder durchführen will, beispielsweise um ihn zu beschreiben, überträgt diese unmittelbar das erste Nutzdatum bzw. Nutzzeichen der zu übertragenden Daten, ohne zuvor eine Referenzzeitdauer zur Kalibrierung zu übertragen. Der Transponder erkennt nun an der Länge bzw. der Zeitdauer zwischen den ersten beiden Feldlücken, ob es sich um eine Referenzzeitdauer oder bereits um ein zu übertragendes Nutzdatum handelt, da die Referenzzeitdauer wesentlich länger ist, als die Zeitdauer, die zur Kodierung eines Zeichenwerts dient. Erkennt nun der Transponder, dass keine Referenzzeitdauer gesendet wird, d.h. dass die Basisstation den ersten Datenübertragungsprotokolltyp verwendet, aktiviert der Transponder den ersten Datenübertragungsprotokolltyp. In diesem Fall wird unmittelbar, d.h. ohne vorherige Kalibrierung durch Auswerten der Referenzzeitdauer, mit der Dekodierung der empfangenen Zeichen bzw. Daten im Transponder begonnen. Dies ermöglicht den Einsatz von Transpondern des zweiten Datenübertragungsprotokolltyps mit Basisstationen, die lediglich den erste Datenübertragungsprotokolltyp implementieren. In diesem Fall können Basisstationen eines beliebigen Datenübertragungsprotokolltyps mit Transpondern eines beliebeigen Datenübertragungsprotokolltyps kommunizieren.

In einer Weiterbildung des Verfahrens beträgt der erste Zeichenwert "0" und der zweite Zeichenwert "1". Auf diese Weise kann mit einer zugehörigen Zeitdauer genau ein Bitwert kodiert werden. Bevorzugt beträgt in binärer Darstellung ein dritter Zeichenwert "10" und ein vierter Zeichenwert "11". Auf diese Weise sind mit insgesamt vier unterscheidbaren Zeitdauern vier unterschiedliche Bitkombinationen kodierbar.

In einer Weiterbildung des Verfahrens wird der Kalibrierwert in Form eines Zählerwertes gespeichert und ein zur Zeitdauerermittlung dienender Zähler am Beginn einer Zeitdauermessung mit dem Zählerwert vorgeladen. Zur Bestimmung des Kalibrierwerts kann beispielsweise ein Zähler mit einer vorbestimmten Bitbreite verwendet werden, der am Beginn der Datenübertragung auf einen Anfangswert, beispielsweise Null, gesetzt wird. Während der Referenzzeitdauer wird der Zähler im Takt der Trägersignalschwingung inkrementiert, wobei auch ein Zählerüberlauf auftreten kann. Der Zählerstand am Ende der Referenzzeitdauer, d.h. bei der zweiten Feldlücke, kann dann, beispielsweise mit einem negativen Vorzeichen versehen, als Anfangswert des Zählers bei der Zeitdauerbestimmung im Zuge der Zeichendekodierung verwendet werden. In diesem Fall wird bei derjenigen Feldlücke, die den Beginn einer Zeichenkodierung markiert, der gespeicherte Anfangswert in den Zähler geladen und der Zähler so lange inkrementiert, bis die nachfolgende Feldlücke detektiert wird.

Die Erfindung wird nachfolgend unter Bezugnahme auf die Zeichnungen beschrieben. Hierbei zeigen schematisch:

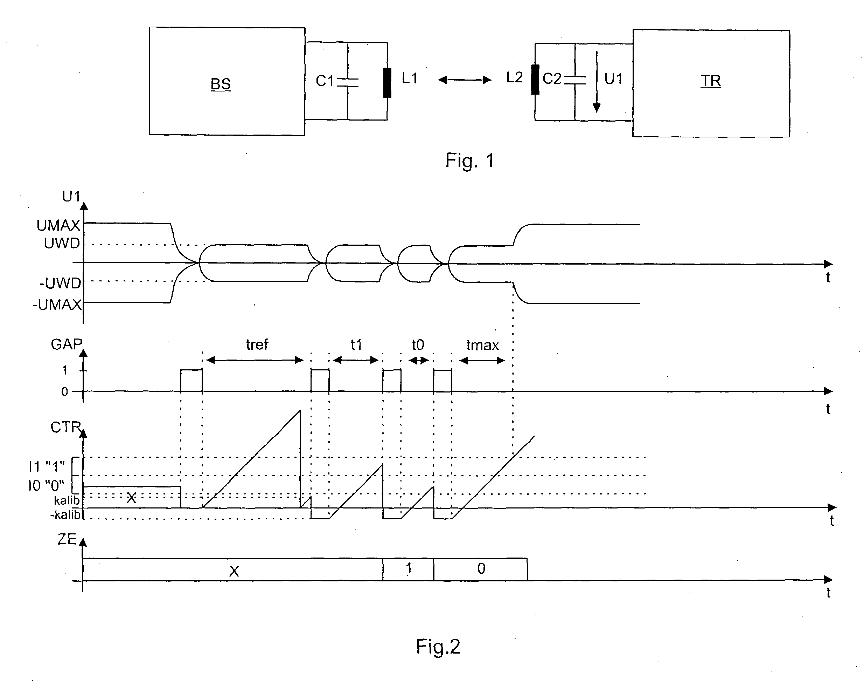

- Fig. 1: ein RFID-System mit einer Basisstation und einem Transponder,
- Fig. 2: Zeitverlaufsdiagramme von Signalen bei einer erfindungsgemäßen Datenübertragung von der Basisstation zu dem Transponder von Fig. 1, wobei der Transponder sowohl einen ersten Datenübertragungsprotokolltyp als auch einen zweiten Datenübertragungsprotokolltyp unterstützt und die Basisstation eine Referenzzeitdauer überträgt,

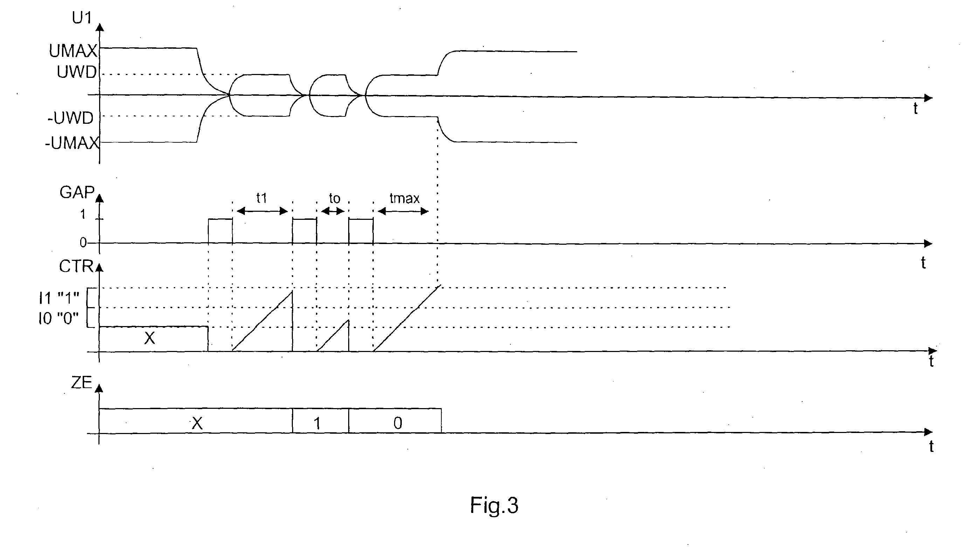

- Fig. 3: Zeitverlaufsdiagramme von Signalen bei einer erfindungsgemäßen Datenübertragung von der Basisstation zu dem Transponder von Fig. 1, wobei der Transponder sowohl den ersten Datenübertragungsprotokolltyp als auch den zweiten Datenübertragungsprotokolltyp unterstützt und die Basisstation keine Referenzzeitdauer überträgt, und

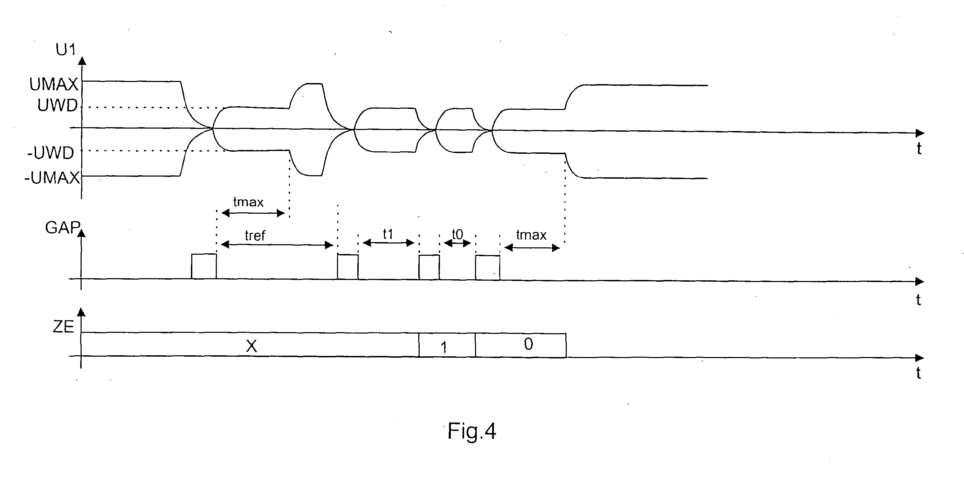

- Fig. 4: Zeitverlaufsdiagramme von Signalen bei einer erfindungsgemäßen Datenübertragung von der Basisstation zu dem Transponder von Fig. 1, wobei der Transponder lediglich den ersten Datenübertragungsprotokolltyp unterstützt und die Basisstation die Referenzzeitdauer überträgt.

Fig. 1 zeigt ein RFID-System mit einer Basisstation BS und einem passiven Transponder TR. Zur Datenübertragung mittels induktiver Kopplung weist die Basisstation BS in herkömmlicher Weise eine Antennenspule L1 und einen Kondensator C1 auf. Der Transponder TR weist entsprechend ebenfalls eine Antennenspule L2 und einen Kondensator C2 auf. Die Antennenspulen L1 und L2 bilden in einem Nahfeld der jeweiligen Antennenspulen L1 und L2 einen Transformator.

Zur Datenübertragung von der Basisstation BS zum Transponder TR erzeugt die Basisstation BS ein Trägersignal mit einer Frequenz von 125kHz, dessen Amplitude zur Erzeugung von Feldlücken vollständig unterdrückt wird. Die Datenübertragung vom Transponder TR zur Basisstation BS erfolgt mittels Lastmodulation.

Fig. 2 zeigt Zeitverlaufsdiagramme von Signalen bei einer erfindungsgemäßen Datenübertragung von der Basisstation BS zu dem Transponder TR von Fig. 1, wobei der Transponder TR sowohl einen ersten Datenübertragungsprotokolltyp als auch einen zweiten Datenübertragungsprotokolltyp unterstützt und die Basisstation BS am Beginn der Datenübertragung eine Referenzzeitdauer "tref" überträgt.

Vor der Datenübertragung erzeugt die Basisstation BS durch ihre Antennenspule L1 ein magnetisches Wechselfeld mit einer Frequenz von 125kHz, welches aufgrund der induktiven Kopplung eine Wechselspannung U1 in der Antennenspule L2 des Transponder TR induziert, wobei in Fig. 2 lediglich die Hüllkurve der Wechselspannung U1 dargestellt ist. Eine Amplitude der Wechselspannung U1 wird durch nicht gezeigte Klemmdioden des Transponders TR auf eine maximale Spannung UMAX begrenzt bzw. geklemmt.

Zur Einleitung der Datenübertragung im Rahmen eines schreibenden Zugriffs auf den Transponder TR erzeugt die Basisstation BS eine Feldlücke bzw. ein Gap durch Unterdrückung des Trägersignals. Aufgrund der hohen Güte des Parallelschwingkreises fällt jedoch die Spannung U1 nur langsam entlang der Hüllkurve ab. Der Verlauf der Spannung U1 wird im Transponder TR ausgewertet. Wenn die Spannung U1 einen internen Schwellenwert erstmalig unterschreitet, wird transponderintern ein aktives Signal GAP erzeugt. Das erstmalig aktivierte Signal GAP bewirkt, dass die maximale Spannung U1 auf einen Wert UWD begrenzt bzw. geklemmt wird, der niedriger als der Wert UMAX ist. Die Spannungsbegrenzung auf den Wert UWD erfolgt im Transponder TR üblicherweise dadurch, dass ein Schwellspannungsbauelement durch ein parallel geschaltetes Schaltelement kurzgeschlossen wird.

Die Spannung U1 wird so lange auf den Wert UWD begrenzt, bis ein Ende der Datenübertragung im Transponder TR erkannt wird. Das Ende der Datenübertragung wird im Transponder TR dann erkannt, wenn ein Zeitdauermaximalwert tmax zwischen aufeinanderfolgenden Feldlücken bzw. Gaps überschritten wird.

Nach dem Erzeugen der ersten Feldlücke wird ein transponderinterner Zähler CTR von einem zuvor undefinierten Zählerwert "X" auf einen Zählerwert von "0" initialisiert. Der Zähler bzw. der Zählerwert CTR wird daraufhin beginnend bei der fallenden Flanke des ersten Gap-Signals im Takt bzw. bei jeder neuen Periode des Trägersignals inkrementiert. Die Referenzzeitdauer tref, d.h. die Zeitdauer zwischen der fallenden Flanke des ersten Gap-Signals und der steigenden Flanke des drauffolgenden, zweiten Gap-Signals, ist bei dem in Fig. 2 gezeigten Ausführungsbeispiel so groß, dass der Zählerwert CTR einmalig überläuft und erneut bei dem Zählerwert "0" losläuft. Bei der steigenden Flanke des zweiten Gap-Signals weist der Zähler einen Zählerwert "kalib" auf, der mit negativem Vorzeichen versehen bei nachfolgenden Zeitdauermessungen als Anfangswert des Zählers verwendet wird.

Bei der fallenden Flanke des zweiten Gap-Signals wird der Zähler CTR im Takt des Trägersignals, beginnend bei einem Wert "-kalib" inkrementiert. Bei der steigenden Flanke des dritten Gap-Signals wird der Zählerwert CTR ausgelesen und überprüft, in welchem Bereich der ausgelesene Zählerwert liegt. Der Zählerwert CTR liegt in einem Wertebereich bzw. Intervall, das einem Zeichenwert von "1", d.h. einer Zeitdauer "t1" entspricht, die von der Basisstation zur Kodierung eines Zeichens mit dem Wert "1" verwendet wird.

Nach dem Auslesen des Zählerwerts CTR wird der Zähler CTR erneut mit dem Kalibrierwert "-kalib" vorgeladen. Bei der fallenden Flanke des dritten Gap-Signals wird der Zähler CTR im Takt des Trägersignals, beginnend bei dem Wert "-kalib" inkrementiert. Bei der steigenden Flanke des vierten Gap-Signals wird der Zählerwert CTR ausgelesen und überprüft, in welchem Bereich der ausgelesene Zählerwert liegt. Der Zählerwert CTR liegt in einem Wertebereich bzw. Intervall, das einem Zeichenwert von "0",' d.h. einer Zeitdauer "t0" entspricht, die von der Basisstation zur Kodierung eines Zeichens mit dem Wert "0" verwendet wird.

In dem unteren Diagramm von Fig. 2 sind die im Transponder TR dekodierten Zeichenwerte dargestellt. Das Zeichen "X" repräsentiert hierbei einen undefinierten Zeichenwert.

Da die Basisstation BS im gezeigten Ausführungsbeispiel lediglich die exemplarische Bitfolge "10" an den Transponder TR überträgt, wird im Anschluss an die vierte Feldlücke im Rahmen der Datenübertragung keine weitere Feldlücke mehr erzeugt. D.h., bei der fallenden Flanke des vierten Gap-Signals wird der Zähler CTR im Takt des Trägersignals, beginnend wiederum bei dem Wert "-kalib" inkrementiert. Wenn der Zählerwert CTR das dem Zeichenwert "1" zugeordnete Intervall verlässt, erkennt der Transponder TR ein Überschreiten des Zeitdauermaximalwerts tmax zwischen aufeinanderfolgenden Feldlücken und beendet die aktuelle Datenübertragung, d.h. setzt seine Empfangseinheit zurück. Dies bewirkt unter anderem, dass der maximale Wert der Spannung U1 wieder auf UMAX angehoben wird, da die Überbrückung des die Spannungsbegrenzung auf UWD bewirkenden Schwellspannungsbauelements wieder aufgetrennt wird.

Der Transponder TR kann in einem nachfolgenden Datenübertragungsvorgang erneut Daten empfangen. Aufgrund der Kalibrierung der Zeitdauermessung mittels der Referenzzeitdauer können Timingschwankungen der detektierten Gap-Signale, beispielsweise aufgrund unterschiedlicher Güten der Antennenspule L2 unterschiedlicher Transponder, kompensiert werden.

Fig. 3 zeigt Zeitverlaufsdiagramme von Signalen für einen Fall, bei dem der Transponder sowohl den ersten Datenübertragungsprotokolltyp als auch den zweiten Datenübertragungsprotokolltyp unterstützt und die Basisstation keine Referenzzeitdauer "tref" überträgt.

Nach dem Erzeugen der ersten Feldlücke durch die Basisstation wird wie im zuvor beschriebenen Beispiel der transponderinterne Zähler CTR von dem zuvor undefinierten Zählerwert "X" auf den Zählerwert "0" initialisiert. Der Zähler bzw. der Zählerwert CTR wird daraufhin beginnend bei der fallenden Flanke des ersten Gap-Signals im Takt bzw. bei jeder neuen Periode des Trägersignals inkrementiert. Bei der steigenden Flanke des zweiten Gap-Signals weist der Zähler einen Zählerwert auf, der in einem Bereich liegt, der einem Zeichenwert von "1" entspricht. Daraus ergibt sich, dass die Zeitdauer zwischen der Feldlücke zur Einleitung der Datenübertragung und der nachfolgenden Feldlücke innerhalb eines Zeitintervalls liegt, der zur Kodierung der zu übertragenden Zeichen dient. Bei dem Beispiel von Fig. 2 liegt der entsprechende Zählerwert "kalib" nicht innerhalb eines zur Kodierung verwendeten Intervalls bzw. Zeitintervalls. Der Transponder TR kann daher anhand des Zählerstandes erkennen, ob eine Referenzzeitdauer zur Kalibrierung oder unmittelbar ein zu übertragendes Zeichen durch die Basisstation BS gesendet wird, d.h. welchen Datenübertragungsprotokolltyp die Basisstation unterstützt.

Wenn der Transponder erkennt, dass die Basisstation den ersten Datenübertragungsprotokolltyp unterstützt, werden die empfangenen Daten bzw. Zeichen ebenfalls anhand des ersten Datenübertragungsprotokolltyps dekodiert. Auf diese Weise ist eine automatisierte Protokollumschaltung in dem Transponder TR möglich, wenn dieser beide Datenübertragungsprotokolltypen unterstützt.

Fig. 4 zeigt Zeitverlaufsdiagramme von Signalen, wenn der Transponder TR lediglich den ersten Datenübertragungsprotokolltyp unterstützt und die Basisstation die Referenzzeitdauer überträgt, d.h. gemäß dem zweiten Datenübertragungsprotokolltyp arbeitet.

Die Datenübertragung wird wie oben beschrieben durch Erzeugen der ersten Feldlücke eingeleitet. Der Transponder TR überwacht danach die Zeitdauer, bis die nächste Feldlücke detektiert wird. Da jedoch die nächste Feldlücke bzw. die nächste steigende Flanke des Gap-Signals erst nach der Zeitdauer "tref" erzeugt wird, wobei die Zeitdauer "tref" größer als der Zeitdauermaximalwert "tmax" ist, setzt der Transponder TR nach der Zeitdauer tmax seine Empfangseinheit zurück und beendet die aktuelle Datenübertragung. Dies wird anhand des Anstiegs des Maximalwerts der Spannung U1 auf dem Wert UMAX deutlich. Danach befindet sich der Transponder TR wieder in einem empfangsbereiten Zustand und detektiert und dekodiert die nachfolgend übertragenen Zeichen ordnungsgemäß, da die den Zeichenwerten "0" und "1" zugeordneten Zeitdauern "t0" bzw. "t1" datenübertragungsprotokolltypunabhängig sind.

Die gezeigten Ausführungsformen ermöglichen einerseits eine störungsfreie Datenübertragung bei parameterabhängigen Timingschwankungen unter Verwendung des zweiten Datenübertragungsprotokolltyps, sofern sich Transponder, welche sowohl den ersten als auch den zweiten Datenübertragungsprotokolltyp unterstützen, im Ansprechbereich einer Basisstation befinden, die ebenfalls den zweiten Datenübertragungsprotokolltyp unterstützt. Gleichzeitig ist das Datenübertragungsverfahren auch mit Transpondern durchführbar, welche keine Kalibriermechanismen zum Ausgleich von Timingschwankungen aufweisen. Weiterhin ist es möglich, Transponder die beide Datenübertragungsprotokolltypen unterstützen, auch mit Basisstationen zu betreiben, die lediglich den ersten Datenübertragungsprotokolltyp unterstützen. Somit ist sowohl eine Abwärts- als auch eine Aufwärtskompatibilität gegeben.

## Patentansprüche

1. Verfahren zur drahtlosen Datenübertragung zwischen einer Basisstation (BS) und einem Transponder (TR) mittels induktiver Kopplung, wobei
- der Transponder (TR) einen ersten Datenübertragungsprotokolltyp und/oder einen zweiten Datenübertragungsprotokolltyp unterstützt,
- unabhängig vom Datenübertragungsprotokolltyp
- die Basisstation (BS) ein Trägersignal mit einer Frequenz in einem Frequenzbereich von 50KHz bis 250KHz sendet,
- eine Datenübertragung von der Basisstation (BS) durch Erzeugen einer Feldlücke des Trägersignals eingeleitet wird,
- Zeichen, die von der Basisstation (BS) an den Transponder (TR) übertragen werden, durch zugehörige Zeitdauern (t0, t1) zwischen jeweils zeitlich aufeinanderfolgenden Feldlücken kodiert werden,
- einem ersten Zeichenwert ("0") eine erste Zeitdauer (t0) zugeordnet wird,
- mindestens einem zweiten Zeichenwert ("1") eine zweite Zeitdauer (t1) zugeordnet wird,
- bei dem ersten Datenübertragungsprotokolltyp
- die Datenübertragung bei einem Überschreiten eines Zeitdauermaximalwerts (tmax) zwischen aufeinanderfolgenden Feldlücken beendet wird,
- bei dem zweiten Datenübertragungsprotokolltyp
- nach dem Einleiten der Datenübertragung eine Referenzzeitdauer (tref) durch die Basisstation (BS) übertragen wird, anhand der ein Kalibrierwert (kalib) in dem Transponder (TR) ermittelt wird, wobei der Kalibrierwert (kalib) zur Kalibrierung nachfolgend empfangener Zeitdauern (t0, t1, tmax) dient,
- die Referenzzeitdauer (tref) größer als der Zeitdauermaximalwert (tmax) gewählt wird und
- die Datenübertragung beendet wird, wenn eine im Anschluss an die Referenzzeitdauer (tref) ermittelte Zeitdauer den Zeitdauermaximalwert überschreitet.

2. Verfahren nach Anspruch 1, **dadurch gekennzeichnet, dass** die erste Zeitdauer (t0), die zweite Zeitdauer (t1) und/oder die Referenzzeitdauer (tref) im Transponder (TR) durch Zählen von Schwingungen des Trägersignals bestimmt werden.

3. Verfahren nach Anspruch 1 oder 2, **dadurch gekennzeichnet, dass** in dem Transponder (TR) überwacht wird, ob eine Zeitdauer zwischen der Feldlücke zur Einleitung der Datenübertragung und einer nachfolgenden Feldlücke innerhalb mindestens eines einstellbaren Zeitintervalls (I1, I2) liegt, und wenn diese Zeitdauer innerhalb des Zeitintervalls (I1, I2) liegt eine Dekodierung der empfangenen Zeichen anhand des ersten Datenübertragungsprotokolltyps durchgeführt wird.

4. Verfahren nach einem der vorhergehenden Ansprüche, **dadurch gekennzeichnet, dass** der erste Zeichenwert "0" beträgt und der zweite Zeichenwert "1" beträgt.

5. Verfahren nach Anspruch 4, **dadurch gekennzeichnet, dass** in binärer Darstellung ein dritter Zeichenwert "10" und ein vierter Zeichenwert "11" beträgt.

6. Verfahren nach einem der vorhergehenden Ansprüche, **dadurch gekennzeichnet, dass** der Kalibrierwert in Form eines Zählerwertes (kalib) gespeichert wird und ein zur Zeitdauerermittlung dienender Zähler (CTR) am Beginn einer Zeitdauermessung mit dem Zählerwert (kalib) vorgeladen wird.
